Europäisches Patentamt

European Patent Office

Office européen des brevets

(11) Publication number: **0 363 175**
**A2**

# EUROPEAN PATENT APPLICATION

(21) Application number: 89310150.1

(22) Date of filing: 04.10.89

(51) Int. Cl.5: **G06F 7/02**

(30) Priority: 07.10.88 US 255097

(43) Date of publication of application:
**11.04.90 Bulletin 90/15**

(84) Designated Contracting States:
**DE FR GB**

(71) Applicant: **International Business Machines Corporation**
**Old Orchard Road**
**Armonk, N.Y. 10504(US)**

(72) Inventor: **Groves, Randall Dean**
**12404 Mercury Lane**
**Austin Texas 78727(US)**

(74) Representative: **Grant, Iain Murray**
**IBM United Kingdom Limited Intellectual**
**Property Department Hursley Park**
**Winchester Hampshire SO21 2JN(GB)**

(54) Comparator apparatus.

(57) A comparator apparatus connected to a clock for detecting an N bit string within an M bit data stream within a single clock cycle comprising a first register for storing the N bit string and a second register for storing the M bit data stream connected a comparison circuit for concurrently comparing the N bit string to each N bit wide group within the M bit data stream and providing an indication when a positive comparison occurs. Also provided, is an indication that signifies the location of the first bit of the N bit wide group within the M bit data stream of this positive comparison.

FIG. 1

EP 0 363 175 A2

# COMPARATOR APPARATUS

This present invention relates comparator apparatus that can be used in a data processing system for locating and detecting character strings in data streams within the data processing system.

Data processing systems access and manipulate data. The data is manipulated and transferred in groups of binary digits or bits. Commonly, a specified unit of bits is used to depict certain information, for example, four bits (a nibble) or 8 bits (a byte) may be used to depict characters. These characters are transferred in a continuous stream of bits between storage and the central processing unit. In manipulating these streams of data, it is necessary to detect and locate certain characters within the data stream.

In the prior art, U.S. Patent No. 4,145,753 entitled "Comparing Apparatus for Variable Length Word" discloses a circuit for comparing variable length word information in a manner that either the most significant digits or least significant digits are aligned with the compared word information to perform the variable length word comparison.

U.S. Patent No. 4,646,329 entitled "Recovery of Frame Alignment Word Having Bits Distributed in a Digital Transmission Signal" discloses a means for making a circular comparison of digital signal information.

U.S. Patent No. 4,625,295 entitled "Textural Comparison System for Locating Desired Character Strings and Delimiter Characters" discloses a system that performs the sequential decoding of stored textural characters to determine when a received character string has been located.

U.S. Patent No. 4,556,951 entitled "Central Processor with Instructions for Processing Sequences of Characters" discloses a data processing system adapted for processing sequences of characters. One of several character string instructions can be processed by this data processing system such that the central processor will retrieve each character from a memory and compare it with a predetermined characteristic.

U.S. Patent No. 4,251,864 entitled "Apparatus and Method in a Data Processing System for Manipulation of Signal Groups Having Boundaries Not Coinciding With Boundaries of Signal Group Storage Space" discloses a data processing system that manipulates operands with have operand boundaries at arbitrary positions in boundary words.

IBM Technical Disclosure Bulletin, Volume 23, No. 5, October, 1980, pages 2051-2056 entitled "Scan Instruction" discloses an instruction for scanning through a character string from left to right in a byte by byte fashion.

IBM Technical Disclosure Bulletin, Volume 20, No. 8, January, 1978, entitled "Variable Length Byte String Compare and Move Instruction" discloses an instruction for scanning a command string for a delimiter or for the first non-delimiter character.

All of the above art discusses the function of locating commands strings within data streams. However, all of the above art discloses techniques that require several clock cycles to perform this function. In reduced instruction set computers (RISC) data processing systems that manipulate character strings, it is important to detect and locate character strings within data streams as fast as possible and the present invention seeks to enable the detection of a predetermined character string during a data stream having a larger number of characters than the character string within a single clock cycle.

The present invention provides comparator apparatus connected to a clock for detecting an N bit string within an M bit data stream within a single clock cycle comprising:
first register means for storing the N bit string;
second register means for storing the M bit data stream; and
comparison means connected to the first register means, the second register means and the clock for concurrently comparing the N bit string to each N bit wide group within the M bit data stream.

Such an arrangement can be caused to provide information specifying the actual bit location of the start of the detected character string.

In an embodiment of the present invention disclosed hereinafter, a comparator connected to a clock is provided for detecting an N bit string in a M bit data stream within a single clock cycle. The comparator includes a first register for storing the N bit string, a second register for storing the M bit data stream, and a comparison circuit connected to the first register and the second register and the clock for concurrently comparing the N bit string to each N bit wide group within the M bit data stream for providing an indication of a positive comparison. An indication of the location of the first bit of the compared N bit string within the M bit data stream.

The comparator apparatus includes a shift register for storing the data stream and a second register for storing the N bit string. The bit outputs of both of these registers are connected to an array of exclusive OR gate logic. The array provides signal outputs to match and location logic that provides the match indication signal and also provides a multibit signal indicating the location of the first bit of the character string in the shift register stored data stream.

In an alternative embodiment, matching is only sought for on N bit boundaries.

The present invention will be described further by way of example with reference to embodiments thereof as illustrated in the accompanying drawings, in which:

Figure 1 is a block diagram of the comparator apparatus;

Figure 2 is a flow chart illustrating the operation of the control circuit;

Figure 3 is a schematic diagram illustrating the shift register and comparison register connected to the comparison logic;

Figure 4 is a diagram illustrating the match circuitry;

Figure 5 is a block diagram illustrating the location circuitry;

Figure 6 illustrates an example comparing a data stream to a predefined character string in the comparison logic;

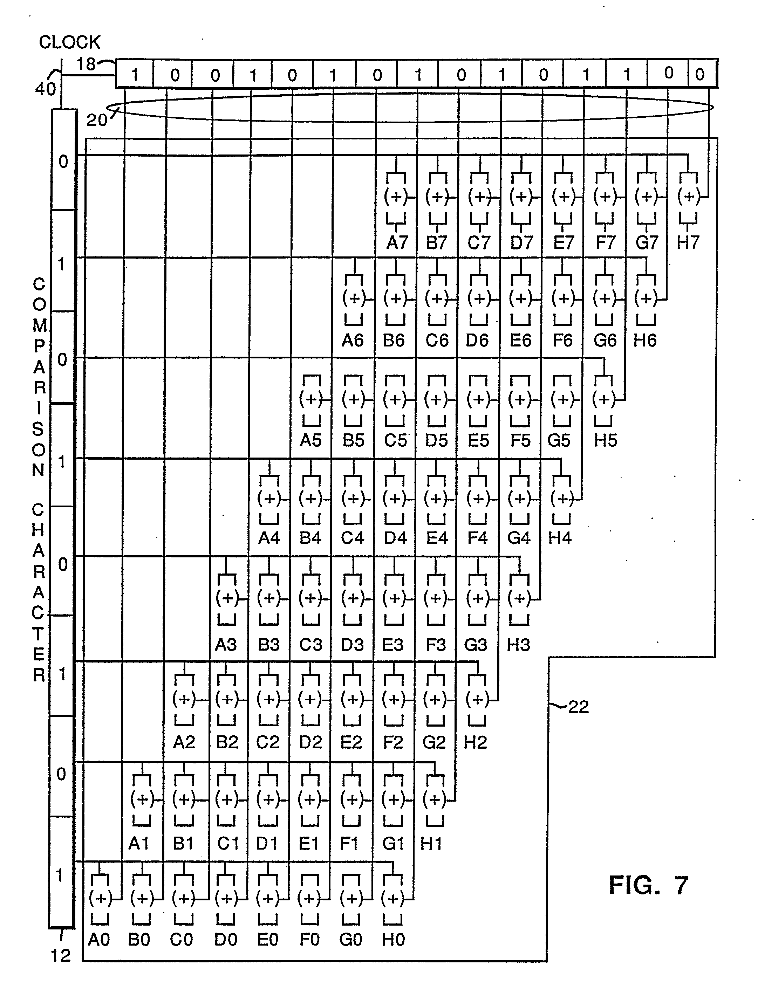

Figure 7 is the second cycle of the first example illustrating the comparison of a data stream to a predefined character string; and

Figure 8 is a diagram illustrating a second embodiment wherein the character strings are specified to occur on a specific boundary within the data stream.

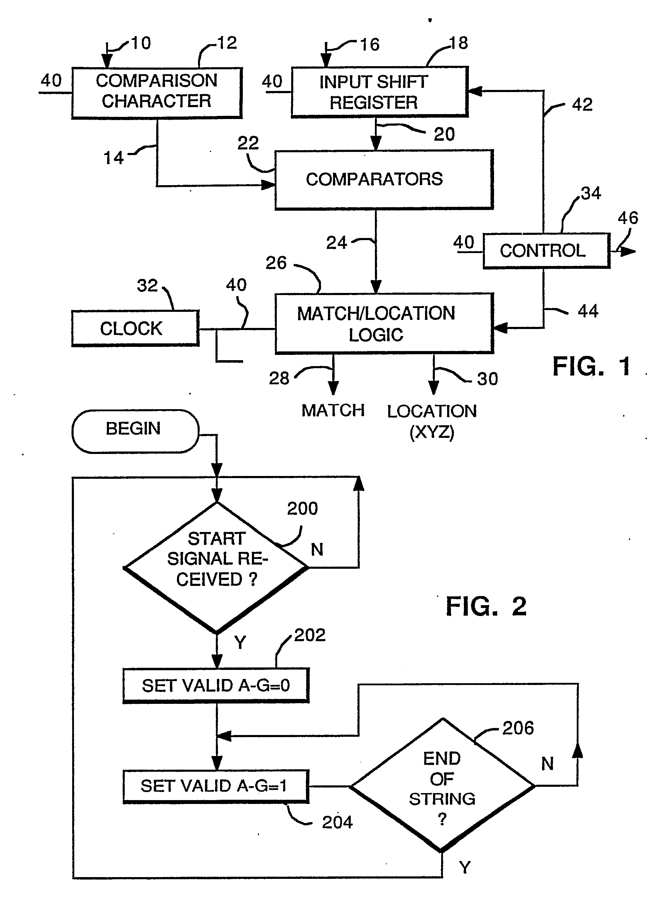

Figure 1 illustrates in block diagram form one embodiment of the present invention. A predefined character string is placed in the comparison character register 12 over line 10. The data stream is input through line 16 into the input shift register 18. The output of the comparison character register 12 is provided to the comparator circuitry 22 by line 14. Likewise, the output of the input shift register 18 is provided over line 20 the comparator circuitry 22. The output of the comparator circuitry is provided by a line 24 to the match/location logic 26. The match/location logic provides two outputs. The first output, on line 28, is a single bit indication of whether the character string stored in register 12 was in fact detected in the input shift register 18. The second output of the match/location logic 26, on line 30, is a multibit specification of the actual location of the first bit of the compared character string in the input shift register 18. Clock 32 provides a clock cycle signal on line 40 to the match/location logic 26, comparison character register 12, input shift register 18 and control circuit 34.

Figure 2 is a flow chart illustrating the operation of the control circuit 34. Control circuit 34 receives the start signal on line 46 and provides an enable signal on line 42 to enable the input shift register 18 to input a first group of bits. In the preferred embodiment, the number of bits input during a clock cycle is less than the number of bits stored by the input shift register 18. Therefore, the control circuit 34 has to indicate to the match/location logic 26 that certain bits in the input shift register 18 are not valid. This indication is provided on line 44. In Figure 2, the control circuit 34 receives the start signal on line 46 in step 200. This start signal results from the decoding of an instruction to start the comparison. In step 202, the control circuit 34 provides the signals on lines 42 and 44 as discussed to input the first group of bits and to provide the not valid signal for the appropriate bit locations in the match/location logic 26. At the next clock cycle, the control circuit sends the valid signal on line 44 as illustrated in step 204. In step 205, a test is made to determine if the end of string has been encountered. If not, the control circuit 34 returns to step 204. If so, the control circuit returns to step 200 to await the next start signal.

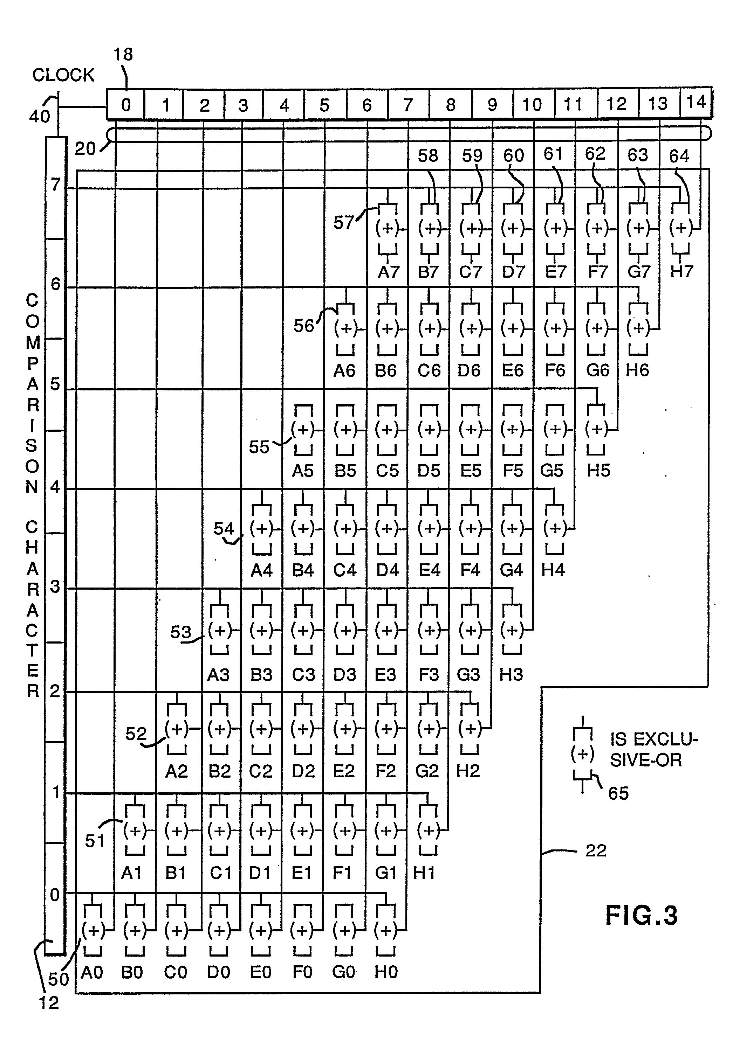

Figure 3 is a diagram illustrating the comparator logic 22 connected to the shift register 18 and the comparison character register 12. The comparison character in this example is 8 bits and data is arriving at the rate of 8 bits per cycle. The input shift register 18 has a 15 bit capacity. In operation, the bit locations 8 through 14 are shifted into bit locations 0 through 6 and the incoming bit stream is placed in bit locations 7 through 14 in a single clock cycle. These bits are output from register 18 on lines 20. The comparison character register 12 includes 8 bits. These 8 bits define the character to be detected. The output of register 12 are provided on lines 14 to the comparator logic 22. The comparator logic 22 includes an array of exclusive OR gates illustrated by symbol 65. This array includes rows 50 - 57 and columns 57 - 64. Each exclusive OR gate provides an output. The outputs are denoted by column indicators A - H and the row outputs are denoted by numbers 0 - 7. Therefore, in the present illustration, the number of output lines from the comparator logic 22, on line 24, would be 120 output signals.

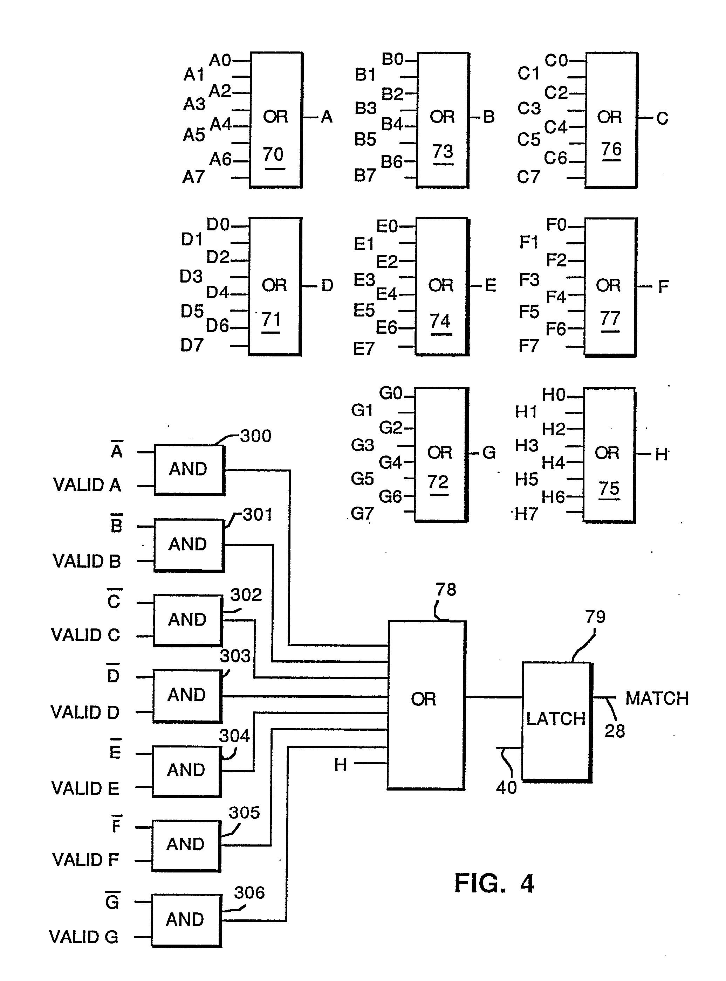

The match/location logic 26 is illustrated in Figures 3 and 4. In Figure 4 the match logic is illustrated as including a series of OR gates 70 - 77. Each OR gate, such as OR gate 70, receives the output from a column of the exclusive OR array in comparator logic 22. The output of the OR gate is the logical OR for the column input lines. The negated outputs of OR gates 70 - 77 are provided to AND gates 300-306 with the valid signals from line 44. The outputs of AND gates 300-306 are input to OR gate 78 which outputs the match signal to latch 79 which provides the latched output on line 28. The match signal on line 28 is a single bit signal indicating that the 8 bit character string in register 12 has been located somewhere within the 15 bits of the shift register 18.

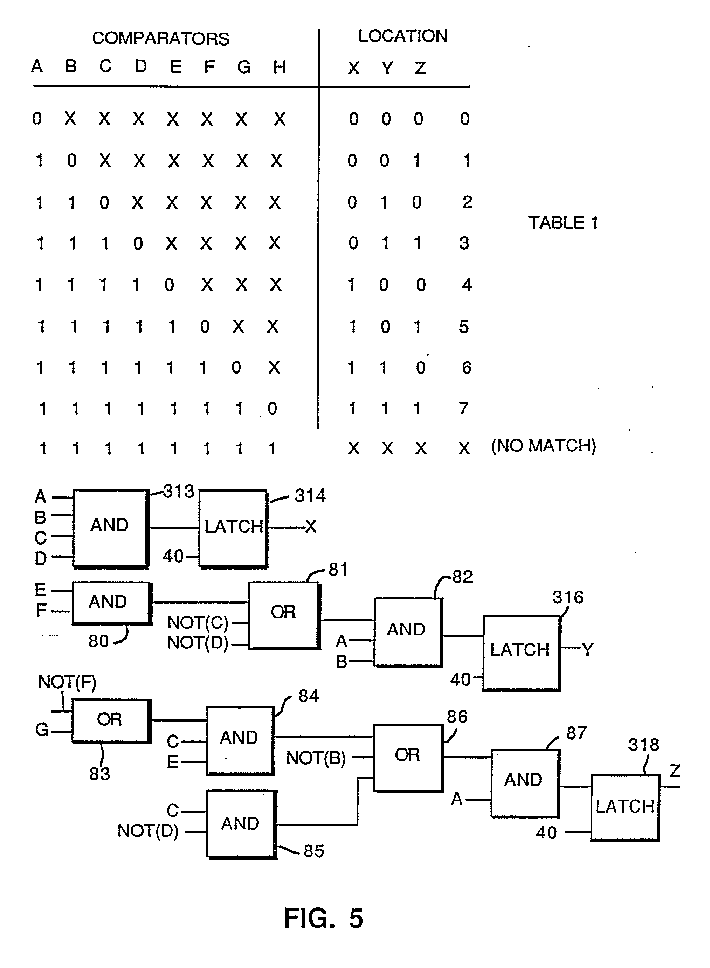

The OR gate logic of Figure 4 (specifically OR gates 70 - 77) also provide inputs to the location logic illustrated in Figure 5. In this embodiment, the location logic signal is a 3 bit signal that indicates the location of the first bit of the character string of register 12 in the shift register 18. The actual decoding of the outputs of OR gates 70 - 77 into the 3 bit location indicator is illustrated in Table 1. The 3 bit output consists of bits X, Y and Z. Bit X is output from latch 314 which is the clocked output from an AND gate 313 that receives inputs from OR gates 70, 73, 76, and 71. Bit Y is output from latch 316 which is the clocked output from three stages of logic consisting of AND gate 80, OR gate 81 and AND gate 82. AND gate 80 receives inputs from OR gates 74 and 77. The output of AND gate 80 is provided to OR gate 81 together with the negated outputs of OR gates 76 and 71. The output of OR gate 81 is provided to AND gate 82 together with the outputs of OR gates 70 and 73. The Z bit is output from latch 318 which is the clocked output from OR gate 83, AND gate 84, AND gate 85, OR gate 86 and AND gate 87. OR gate 83 receives the negated output of OR gate 77 and the output of OR gate 72. The output of OR gate 83 is provided to AND gate 84 together with the outputs of OR gates 76 and 74. AND gate 85 receives the output from OR gate 76 and a negated output from OR gate 71. The outputs of AND gates 84 and 85 are provided to OR gate 86 together with the negated output of OR gate 73. The output of OR gate 86 is provided to AND gate 87 together with the output from OR gate 70.

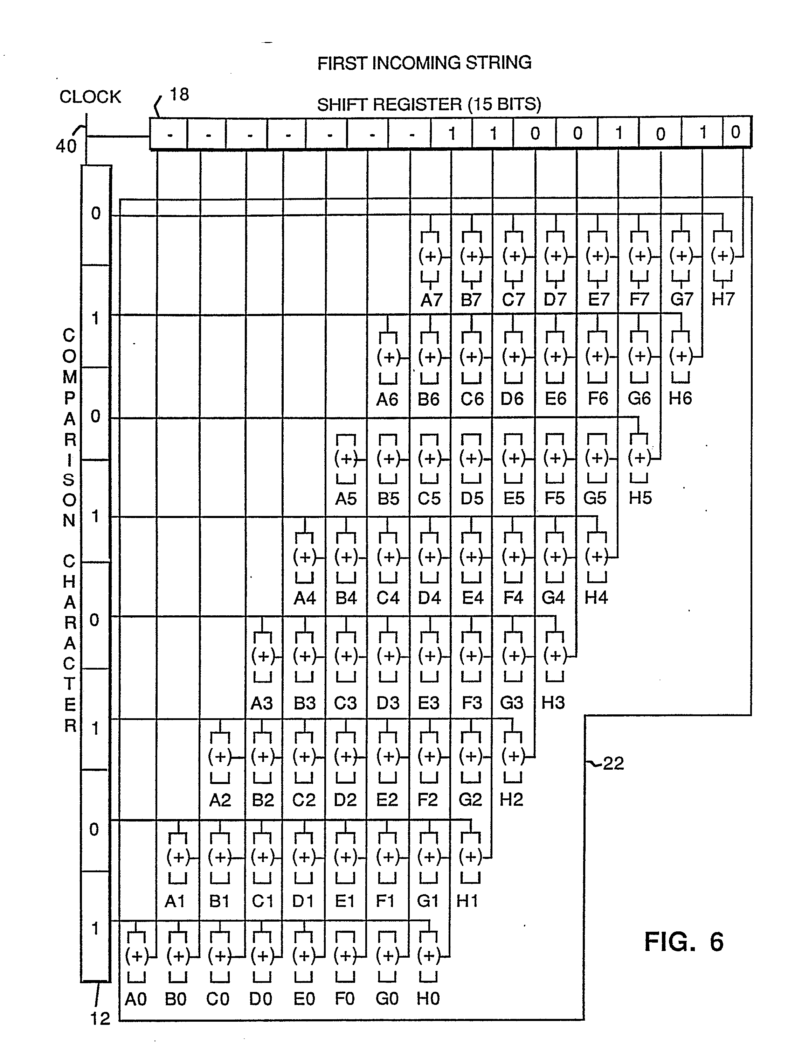

An example will be discussed that will illustrate the operation of this arrangement. In this example a comparison character 10101010 is provided to comparison character register 12 (see Figure 6). A bit string 1100101010101100 is provided to the input shift register 18 at the rate of 8 bits per clock cycle. Figure 6 illustrate the contents of register 18 after the first cycle. The output of the comparator logic 22 and the match/location logic 26 indicate that a match has not occurred. In this case, any data on the location lines 30 would be invalid and ignored.

In the second cycle the comparison character 10101010 remains in the comparison character register 12. Bit locations 8 through 14 of register 18 are shifted left into bit locations 0 through 6 and the next 8 bits of the incoming string are placed in bit locations 7 through 14 of register 18 resulting in the value of 100101010101100. At this time the output of OR gates 70, 72 - 77 are 1 (indicating no match). However, the output of OR gate 71 is a 0 indicating that a match as occurred. The 0 output from OR gate 71 results in an XYZ output of 011 (see Table 1). 011 is the bit location of the start of the detected character string 10101010.

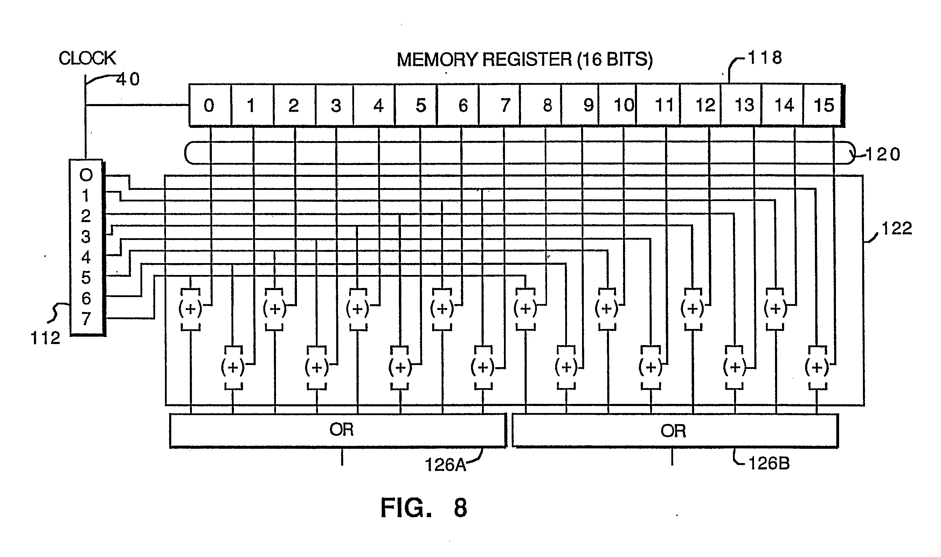

Figure 8 illustrates an embodiment of the invention wherein the location of the character strings to be detected will always occur on byte boundaries. In other words, the bytes will either be in bit location 0 - 7 or 8 - 15 as illustrated in register 118. Like the earlier discussed embodiment, the 8 bit comparison character is stored in register 112. The comparator logic 122 consists of a single row of exclusive OR gates that provide outputs to one of two OR gates 126A and 126B. The outputs of these OR gates 126A and 126B provide not only the indication that a match has occurred but obviously an indication of the location of the match. Therefore, when character strings occur on bit boundaries, the embodiment illustrated in Figure 8 will detect the occurrence of a specific character string within a single clock cycle.

## Claims

1. Comparator apparatus connected to a clock for detecting an N bit string within an M bit data stream within a single clock cycle comprising: first register means for storing the N bit string; second register means for storing the M bit data stream; and comparison means connected to the first register means, the second register means and the clock for concurrently comparing the N bit string to each N bit wide group within the M bit data stream.

2. Apparatus as claimed in claim 1, wherein the comparison means includes means for providing a first indication of a positive comparison and a second indication of the location of the first bit of the string in the second register.

3. Apparatus as claimed in claim 2, wherein the second register means includes means for storing at least M + N - 1 bits.

4. Apparatus as claimed in claim 3, wherein the second means includes means for loading at least M bits in a single clock cycle.

5. Apparatus as claimed in claim 4, wherein the comparator means includes Exclusive Or gate means for comparing bits in the M bit data stream in the second register means with its correspondingly located bit in the first register means.

6. Apparatus as claimed in claim 2, wherein there is provided a shift register for storing the data stream and a second register for storing the N bit string, the bit outputs of both of these registers being connected to an array of exclusive OR gate logic which array provides signal outputs to match and location logic that provides the match indication signal and also provides a multibit signal indicating the location of the first bit of the character string in the shift register stored data stream.

7. Apparatus as claimed in any preceding claim, wherein a match is sought for only on N bit

boundaries.

FIG. 1

FIG. 2

FIG.3

EP 0 363 175 A2

**FIG. 4**

| COMPARATORS | | | | | | | | LOCATION | | | |
|---|---|---|---|---|---|---|---|---|---|---|---|
| A | B | C | D | E | F | G | H | X | Y | Z | |
| 0 | X | X | X | X | X | X | X | 0 | 0 | 0 | 0 |
| 1 | 0 | X | X | X | X | X | X | 0 | 0 | 1 | 1 |
| 1 | 1 | 0 | X | X | X | X | X | 0 | 1 | 0 | 2 |
| 1 | 1 | 1 | 0 | X | X | X | X | 0 | 1 | 1 | 3 |
| 1 | 1 | 1 | 1 | 0 | X | X | X | 1 | 0 | 0 | 4 |
| 1 | 1 | 1 | 1 | 1 | 0 | X | X | 1 | 0 | 1 | 5 |
| 1 | 1 | 1 | 1 | 1 | 1 | 0 | X | 1 | 1 | 0 | 6 |
| 1 | 1 | 1 | 1 | 1 | 1 | 1 | 0 | 1 | 1 | 1 | 7 |
| 1 | 1 | 1 | 1 | 1 | 1 | 1 | 1 | X | X | X | X (NO MATCH) |

TABLE 1

FIG. 5

FIRST INCOMING STRING

FIG. 6

FIG. 7

FIG. 8

EP 0 363 175 A2